# EUROPÄISCHE PATENTSCHRIFT

(11) **EP 0 290 078 B1**
(45) Veröffentlichungstag und Bekanntmachung des Hinweises auf die Patenterteilung: **31.03.1993**
(21) Anmeldenummer: 88200785.9
(22) Anmeldetag: 25.04.1988
(51) Int. Cl.: G11B 15/18, G11B 15/10

(54) **Vorrichtung zum Verstellen eines Funktionsteiles in einem elektrischen Gerät**
Device for displacing a functional part in an electrical apparatus
Dispositif de déplacement d'un élément de fonction dans un appareil électrique

(30) Priorität: 02.05.1987 DE 3714702
(43) Veröffentlichungstag der Anmeldung: 09.11.1988
(73) Patentinhaber: Philips Patentverwaltung GmbH, 22335 Hamburg (DE); Philips Electronics N.V., 5621 BA Eindhoven (NL)
(72) Erfinder: Klös-Hein, Karl, D-6301 Wismar (DE); Rumpf, Horst, D-6348 Herborn-Schönbach (DE)
(74) Vertreter: Kupfermann, Fritz-Joachim, Dipl.-Ing.

(56) Entgegenhaltungen:
- DE-B- 2 910 343
- DE-B- 2 919 279
- FR-A- 2 401 486
- FR-A- 2 514 928

## Beschreibung

Die Erfindung bezieht sich auf eine Vorrichtung zum Verstellen eines Funktionsteiles in einem elektrischen Gerät, insbesondere der Kopfplatte in einem Magnetbandgerät, wobei das Funktionsteil verstellt wird zwischen einer Ruhestellung und zwei im Abstand voneinander liegenden ersten und zweiten Arbeitsstellungen, wobei das in Richtung auf die Ruhestellung federbelastete Funktionsteil in der ersten und der zweiten Arbeitsstellung mittels einer ersten und einer zweiten Elektromagnetvorrichtung gehalten werden.

Bei Magnetbandgeräten, die zum Abspielen von Bandkassetten, insbesondere sogenannten Compact-Kassetten, eingerichtet sind, ist es bekannt, den Magnetkopf gegenüber dem in der Kassette angeordneten Magnetband zu verstellen. Hierzu ist der Magnetkopf an einer Kopfplatte angeordnet, die elektromechanisch verschieblich ist. Es gibt eine Ruhestellung, in der die Kopfplatte mit dem Magnetkopf von dem Band völlig weggezogen ist; es gibt eine erste Arbeitsstellung, in der die Kopfplatte mit dem Magnetkopf gegen das Band voll vorgefahren ist, die sogenannte Spiel-Stellung, und es gibt schließlich eine Zwischenstellung zwischen der ersten Arbeitsstellung und der Ruhestellung, in der das Magnetband nahezu berührungslos an dem Kopf vorbeigeführt werden kann. Diese zweite Arbeitsstellung ist die sogenannte Cue- oder MSS-Stellung.

Aus der DE-A-29 10 343 ist es bekannt, die Kopfplatte mittels einer Feder in der Ruhestellung zu halten. Soll die Kopfplatte in die erste Arbeitsstellung vorgefahren werden, dann wird ein Elektromagnet erregt, der die Kopfplatte über einen Hebelmechanismus in die erste Arbeitsstellung zieht. Aus dieser ersten Arbeitsstellung kann die Kopfplatte über eine Sperrklinkenanordnung im Bereich der zweiten Arbeitsstellung beim Entregen des ersten Magneten in die Ruhestellung zurückfahren, wenn noch ein zweiter Elektromagnet die Sperrklinkenanordnung löst. Löst der zweite Elektromagnet die Sperrklinkenanordnung nicht, dann bleibt die Kopfplatte zunächst in der zweiten Arbeitsstellung stehen.

Aus der DE-B-29 19 279 B1 ist eine Steuereinrichtung in einem Magnetbandgerät bekannt, bei dem eine Kopfplatte mittels einer Feder in Richtung auf eine Ruhestellung belastet ist. Die Kopfplatte ist mittels zweier getrennt angeordneter Stellmagnete, von denen der eine unmittelbar und der andere über einen quer zur Kopfplatte verschieblichen Schieber wirken, entgegen der Federkraft auf ein abzutastendes Magnetband zu verschiebbar. Für die Kopfplatte sind außer der Ruhestellung zwei Arbeitsstellungen vorgesehen. Eine erste Arbeitsstellung ist die Spielstellung, in der der Magnetkopf an dem Magnetband anliegt. Eine zweite Arbeitsstellung ist die Cue-Stellung, in der der Magnetkopf vom Magnetband leicht abgehoben ist. Die erste Arbeitsstellung wird durch das Vorziehen der Kopfplatte mittels der beiden Magnete aus der Ruhestellung erreicht. Die zweite Arbeitsstellung ist nur über die erste Arbeitsstellung anfahrbar.

Es ist Aufgabe der Erfindung, eine Vorrichtung der eingangs erwähnten Art so auszubilden, daß das Funktionsteil mit möglichst wenigen Bauteilen aus einer Ruhelage in zwei Arbeitsstellungen überführbar ist und in diesen festgehalten werden kann.

Die gestellte Aufgabe ist erfindungsgemäß dadurch gelöst, daß das die erste Elektromagnetvorrichtung und die zweite Elektromagnetvorrichtung von einer gemeinsamen Erregerspule erregbar sind und die Jocheisen der Elektromagnetvorrichtungen übereinanderliegend die Erregerspule durchgreifen, daß das Funktionsteil vor der ersten Elektromagnetvorrichtung, an die es sich mit einer ersten Ankerplatte anlegen kann, längsenveränderlich ausgebildet ist und daß eine von der zweiten Elektromagnetvorrichtung gesteuerte Steuervorrichtung vorgesehen ist, mittels der das Funktionsteil jeweils aus der Ruhestellung beim Anlegen an die erste Elektromagnetvorrichtung mit verkürzter Länge seine erste Arbeitsstellung erreicht und durch seine Verlängerung mittels der Steuervorrichtung beim Anlegen an die zweite Elektromagnetvorrichtung in die zweite Arbeitsstelllung gelangt.

Durch den Einsatz nur eines Elektromagneten für die Betätigung des Steuergliedes und des Schlittens wird der Energieaufwand für die Betätigung zur Festlegung der zwei Lagen des Schlittens nur sehr wenig Energie benötigt, und bewegliche Teile gegenüber dem Funktionsteil sind nur der Arm und der Schlitten mit ihren Ankerplatten. Es werden nur wenige Bauteile und wenig Platz benötigt.

Das Steuerglied ist verantwortlich für die Stellung der Ankerplatte gegenüber dem Funktionsteil. Durch die Längenveränderung des Funktionsteiles mittels der Steuervorrichtung werden auf einfache Weise die zwei Arbeitsstellungen erhalten. Von Vorteil ist es dabei, wenn nach einer weiteren Ausgestaltung der Erfindung vorgesehen ist, daß die erste Ankerplatte auf einem Schlitten angeordnet ist, der gegenüber dem Funktionsteil verstellbar ist. Die Längenveränderung läßt sich dabei leicht realisieren.

Nach einer weiteren Ausgestaltung der Erfindung ist vorgesehen, daß die Steuervorrichtung aus einem auf den Schlitten steuernd einwirkenden schwenkbaren Arm und einer auf ihm angeordneten zweiten Ankerplatte besteht, die mit der zweiten Elektromagnetvorrichtung zusammenarbeitet. Dabei ist in Weiterbildung der Erfindung vorgesehen, daß der Schlitten eine Nase aufweist, die mit dem Arm insbesondere zur Längenverstellung des Funktionsteiles zusammenwirkt.

Bewegen sich Nase und Arm aneinander vorbei, so kommt es darauf an, ob der Arm beim Vorbeilaufen der Nase von dieser leicht beiseite geschoben werden kann oder ob die Nase, um am Arm vorbei zu kommen, den Schlitten verschwenken muß. Beim Verschwenken verschiebt sich der Schlitten auf dem Funktionsteil. Erreicht werden die beiden Funktionsvarianten durch das Erregen oder Nicht-Erregen der zweiten Elektromagnetvorrichtung. Ist die zweite Magnetvorrichtung erregt, dann muß die Nase mit der ersten Ankerplatte ausweichen. Ist die zweite Magnetvorrichtung nicht erregt, dann weicht der Arm vor der Nase und dem Schlitten aus. Das Ausweichen oder Nicht-Ausweichen der Nase und damit das Verschwenken oder Nicht-Verschwenken des Schlittens bestimmt die zwei Funktionslagen bzw. die Länge des Funktionsteiles. Diese Funktionsweise wird nach einer weiteren Ausgestaltung der Erfindung erreicht, indem die zwei Lagen des Schlittens der ersten Ankerplatte gegenüber dem Funktionsteil bestimmt werden von dem Arm, wobei die eine Lage bei von der zweiten Elektromagnetvorrichtung gehaltener zweiter Ankerplatte und die andere Lage bei freigegebener zweiter Ankerplatte erreicht wird. Dabei wird erreicht, daß in der einen Lage (Play) das Funktionsteil mehr in Richtung auf die Elektromagnetvorrichtung verstellt wird als in der anderen Lage (Schnellauf).

Um der ersten Ankerplatte eine fest vorgegebene Bewegung gegenüber dem Funktionsteil zu verleihen, wenn die Ankerplatte von der einen in die andere Lage verschoben werden soll, ist nach einer weiteren Ausgestaltung der Erfindung vorgesehen, daß der Schlitten auf dem Funktionsteil in Kulissen geführt ist und durch Zusammenwirken der Nase mit dem Arm gegenüber dem freien Ende des Funktionsteiles mittels der Kulissen von der anderen in die eine Lage überführbar ist. Dabei ist nach einer weiteren Ausgestaltung der Erfindung vorgesehen, daß zwischen dem Funktionsteil und dem Schlitten eine Zugfeder vorgesehen ist, die den Schlitten mit der ersten Ankerplatte gegenüber dem Funktionsteil in eine Ruhelage überführt. Jeweils bewegen sich der Schlitten und mit ihm die auf ihm aufsitzende Ankerplatte selbsttätig in die eine oder andere gewünschte Vorzugslage gegenüber dem Funktionsteil.

Zur technischen Vereinfachung ist nach einer weiteren Ausgestaltung der Erfindung vorgesehen, daß die erste Elektromagnetvorrichtung und die zweite Elektromagnetvorrichtung als Haltemagneten ausgebildet sind, die nur die an sie herangeführten Ankerplatten anheften. Der Energiebedarf bei Betrieb wird dadurch wesentlich herabgesetzt.

Diese Elektromagnetvorrichtungen können nach einer weiteren Ausgestaltung der Erfindung in vorteilhafter Weise derart ausgebildet sein, daß die Jocheisen U-förmig ausgebildet und mit Polschuhen versehen sind und daß die Jocheisen derart entgegengesetzt mit jeweils einem Schenkel die Spule so durchgreifen, daß sich im Bereich beider axialer Spulenenden jeweils zwei Polschuhe befinden, wobei die einen Polschuhe mit der ersten und die anderen Polschuhe mit der zweiten Ankerplatte zusammenwirken.

Nach einer weiteren Ausgetaltung der Erfindung ist vorgesehen, daß der Arm der zweiten Ankerplatte als L-förmiger Schwenkarm ausgebildet ist, daß der Arm sich mit einem Armteil etwa längs einer Seite des Elektrohaltemagneten erstreckt und auf der anderen Seite der Spule seine Schwenkachse hat, wobei der Arm von einer Feder derart belastet wird, daß sich sein Armteil bis zum Schlitten erstreckt und am entgegengesetzten Ende seine Schwenkachse aufweist, wobei die Feder gleichzeitig die zweite Ankerplatte in Richtung auf die zugeordneten Polschuhe belastet.

Um eine Betätigung des Schlittens mit der ersten Ankerplatte sowohl in der Richtung auf die eine Lage als auch die andere Lage zu ermöglichen, ist nach einer weiteren Ausgestaltung der Erfindung, die in besonderer Weise geeignet ist für ein Magnetband-Kassettengerät, vorgesehen, daß das Funktionsteil Teil einer U-förmig ausgebildeten Kopfplatte ist, die an der Basis den Magnetkopf trägt und die an einen um ein Schwenklager Eckbereich verschwenkbar an einem Gestell angeordnet ist, wobei im Eckbereich mit dem Schwenklager ein Schenkel angreift, der mit einem Verstellorgan zusammenwirkt, und wobei der andere Schenkel im Bereich seines freien Endes den Schlitten mit der ersten Ankerplatte trägt. Durch das Schwenken der Kopfplatte um einen Eckpunkt werden die Verstellbewegungen zwischen der Ruhelage und den zwei Arbeitsstellung möglich gemacht, indem die Kopfplatte mittels eines Stellmechanismus, der gegen einen Schenkel drückt, verschwenkt wird. Zum Verschwenken der Kopfplatte in die Ruhelage und zwei Arbeitsstellungen ist also lediglich ein gradlinig arbeitendes Stellglied erforderlich, und die zwei Arbeitsstellungen werden mit Hilfe der Elektromagnetvorrichtungen sichergestellt.

Die Erfindung wird anhand der Zeichnung näher erläutert. Es zeigen:
Fig. 1 einen Teil eines Magnetbandgerätes mit einer Gestellplatte und einer darauf schwenkbar gelagerten Kopfplatte, die um einen exzentrischen Drehpunkt drehbar gelagert ist, wobei die Kopfplatte in ihrer Ruhestellung geschwenkt ist,
Fig. 2 in schaubildlicher Darstellung eine Elektrohaltemagnetvorrichtung, mittels der die Kopfplatte insbesondere in zwei vorgegebenen Arbeitsstellungen festhaltbar ist,
Fig. 3 die Kopfplatte in einer Lage, in der die Elektrohaltemagnetvorrichtung die Kopfplatte verschwenkt hält, und zwar in einer Stellung mit so großer Verschwenkung, daß der Magnetkopf in die Spielstellung gelangt ist,
Fig. 4 die Kopfplatte in einer Stellung, in der der Tonkopf ein wenig von dem Magnetband abgehoben ist, eine erste Ankerplatte jedoch an dem Elektrohaltemagnetvorrichtung anliegt.

Die Zeichnung zeigt auf eine als Gestell wirkende Chassisplatte 1 eines Magnetband-Kassettengerätes mit einer Kopfplatte 3, die um einen exzentrischen Drehpunkt 5 verschwenkbar ist. Die Kopfplatte 3 ist U-förmig ausgestaltet und weist von den Enden ihrer Basis 7 in gleicher Richtung abstehende Schenkel 9 und 11 auf. Die Schenkel 9 und 11 greifen in Eckbereichen 12 und 13 an. Während der Schenkel 9 mit einem Verstellorgan 14 zusammenwirkt, bildet der Schenkel 11 ein Funktionsteil, welches mit einer Elektrohaltemagnetvorrichtung 15 zusammenarbeitet.

Die Basis 7 der Kopfplatte 3 trägt einen Magnetkopf 16 und Andruckrollen 17a, 17b, die gegenüber der Basis 7 verschwenkbar sind, deren Verschwenkungsart jedoch nicht näher erläutert ist. Die Andruckrollen 17a und 17b können mit Tonwellen 18a und 18b zusammengeführt werden, um das Magnetband in der einen oder anderen Richtung an dem Magnetkopf 16 vorbei zu führen.

Die Verschwenkung der Kopfplatte erfolgt jeweils über das als Exzenterrad dargestellte Verstellorgan 14. Dieses Verstellorgan 14, das selbstverständlich auch als Stange ausgebildet sein kann, wirkt auf eine Feder 19 ein, die am Schenkel 9 eingespannt ist. Über das Stellorgan 14 kann die Kopfplatte 3 um den exzentrischen Drehpunkt 5 schwenken, und zwar bei jedem Anstoßen mittels des Verstellorganes 14, das beispielsweise im Uhrzeigersinn umlaufen kann.

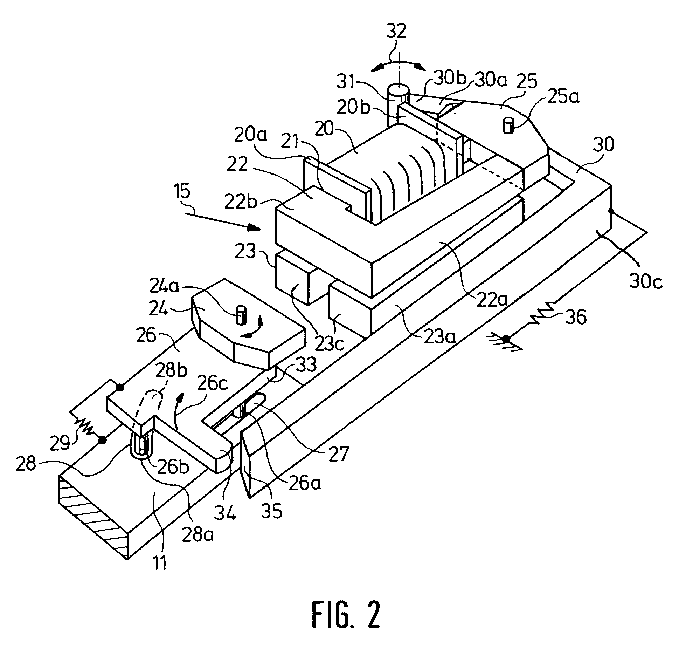

Es wird nun zunächst auf Fig. 2 eingegangen, in der eine kombinierte Elektrohaltemagnetvorrichtung 15 anhand einer schaubildlichen Darstellung näher beschrieben ist. Die Elektrohaltemagnetvorrichtung besteht aus einer Magnetspule 20, in deren Spulenhohlraum 21 Schenkel U-förmiger, magnetisch voneinander getrennter Ankereisen einer ersten Magnetvorrichtung 22 und einer zweiten Magnetvorrichtung 23 eingeschoben sind. Die beiden Ankereisen 22, 23 liegen übereinander, wobei sich die jeweiligen Ankereisenschenkel 22a, 23a paarweise überdecken. Die Eisenjoche 22b, 23b liegen an gegenüberliegenden Spulenenden 20a, 20b. Die Elektrohaltemagnetvorrichtung 15 ist auf der Chassisplatte 1 fest montiert.

Mit den freien Schenkelenden sind Polschuhe 23c und 22c ausgebildet, die mit einer ersten Ankerplatte 24 und eine zweite Ankerplatte 25 zusammenarbeiten. Die erste Ankerplatte 24 ist mittels eines Stiftes 24a drehbar auf einem Schlitten 26 angeordnet. Dieser Schlitten 26 greift mit einem Leitstift 26a in eine Leitnut 27 des Funktionsteiles 11. Ein Führungsstift 26b des Schlittens 26 kann in einer gekrümmten Nut 28 des Funktiontsteiles 11 entlang geführt werden. Die bogenförmige Nut 28 verläuft unter einem schrägen Winkel, quer zu der Nut 27 beginnend, bogenförmig in Richtung auf die kombinierte Elektrohaltemagnetvorrichtung 15 zu. Eine Zugfeder 29 sorgt dafür, daß der Führungsstift 26b im Normalfall in den Endbereich 28a der bogenförmigen Nut 28 einfährt. In dieser Stellung verläuft der Schlitten 26 oberhalb des Schenkels 11 des Führungsteiles parallel zu diesem.

Die zweite Ankerplatte 25 ist auf einem Arm 30 mittels eines Stiftes 25a drehbar angeordnet. Der Arm 30 selbst ist L-förmig ausgestaltet und hat einen kürzeren Armteil 30a, der auch die zweite Ankerplatte 25 trägt und der an seinem freien Ende 30b um eine Drehachse 31 drehbar ist in Richtung eines Doppelpfeiles 32. Ein längerer Armteil 30c erstreckt sich parallel zu der Magnetspule 20 bis zu einer Seitenfläche 33 des Schlittens 26, wo er vor einer Nase 34 des Schlittens mit einer schrägen Auflauffläche 35 endet.

Die Ankerplatten 24 und 25 können, wenn sie an die Polschuhe 23c bzw. 22c angelegt sind, bei Erregen der Magnetspule 20 an den Polschuhen haften. Durch dieses Haften können sie zwei Arbeitsstellungen der Kopfplatte 3 so lange bestimmen, wie die Magnetspule 20 erregt ist. Erst wenn die Magnetspule 20 entregt wird, fallen beide oder auch nur eine Ankerplatte, je nachdem ob beide oder nur eine angelegt waren, ab, und eine Feder 37, die auf die Basis 7 der Kopfplatte 3 einwirkt, kann die Kopfplatte 3 entgegen dem Uhrzeigersinn in eine Ruhestellung verschwenken. Einzelheiten der Elektrohaltemagnetvorrichtung sind in der DE-Patentanmeldung P 37 14 704.8 (PHD 87-084C) beschrieben.

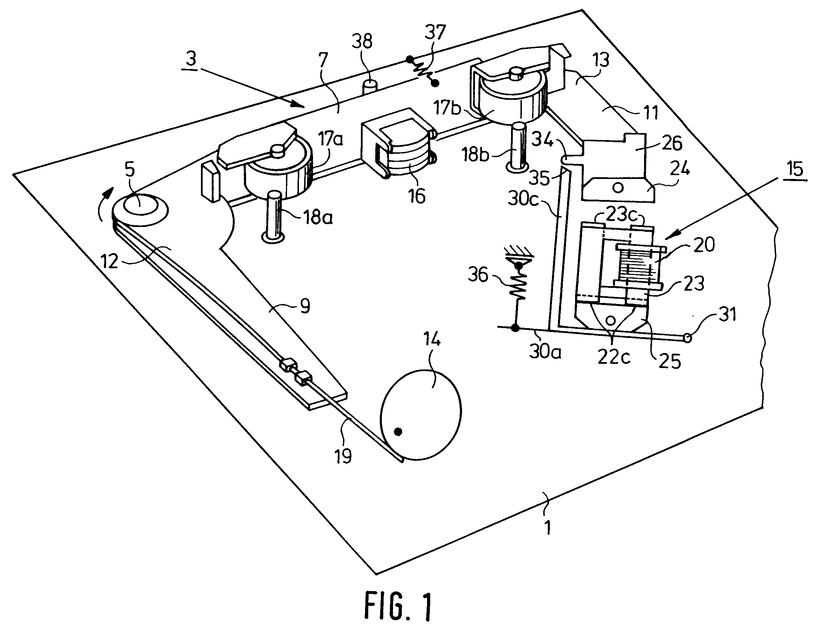

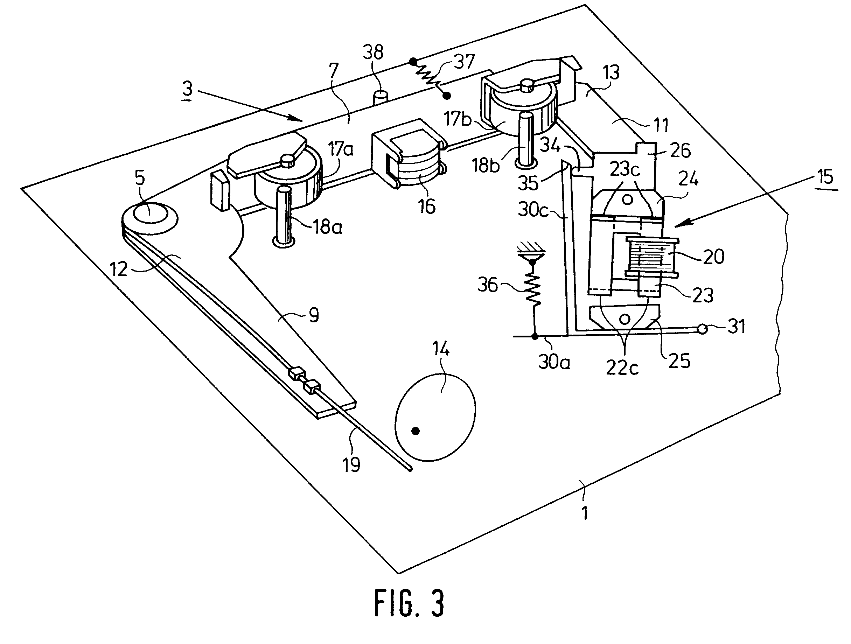

Es wird nun das Zusammenwirken der Kopfplatte mit der kombinierten Elektrohaltemagnetvorrichtung 15 anhand von deren Funktion näher beschrieben. Fig. 1 zeigt die sogenannte Stand-by- oder ruhestellung. Die Magnetspule 20 ist entregt, und die Ankerplatte 24 ist von den Polschuhen 23c des Ankereisens 23 abgerückt. Die Ankerplatte 25 liegt an den Polschuhen 22c an, da eine Zugfeder 36 für eine ständige Anlage sorgt. Die Zugfeder 37 hält die Kopfplatte im Gegenuhrzeigersinn verschwenkt, an einem Anschlag 38 anliegend, in der Ruhe- oder Stand-by-Stellung. Sowohl der Magnetkopf 16 als auch die Andruckrollen 17a und 17b geben ein nicht dargestelltes Magnetband, welches zwischen den Andruckrollen/Tonwellenpaaren 17a, 18a/17b, 18b vor dem Magnetkopf 16 vorbeiläuft, völlig frei. Soll die Kopfplatte nun in die Spielstellung, d. h. eine erste Arbeitsstellung geschwenkt werden und in dieser ersten Arbeitsstellung verharren, dann stößt das umlaufende Stellorgan 14 gegen die Drahtfeder 19, wodurch die Kopfplatte im Uhrzeigersinn verschwenkt wird. Die Magnetspule 20 bleibt zunächst unerregt. Mit dem Verschwenken der Kopfplatte 3 im Uhrzeigersinn fährt auch das Funktionsteil 11 in Richtung auf die Elektrohaltemagnetvorrichtung 15 vor. Die Nase 34 des Schlittens 26 stößt gegen die schräge Fläche 35 des längeren Armteiles 30c. Die Zugfeder 36 ist so schwach bemessen, daß die Nase 34 die Fläche 35 und damit den längeren Armteil 30c entgegen dem Uhrzeigersinn nach außen wegdrückt. Der Führungsstift 26b bleibt in dem Endbereich 28a liegen. Das Funktionsteil 11 führt die erste Ankerplatte gegen die Polschuhe (23c). Die Magnetspule 20 wird nun erregt, und die Ankerplatte 24 wird an den Polschuhen 23c festgehalten (Fig. 3). Damit ist gleichzeitig auch die Kopfplatte 3 in der Spielstellung, der ersten Arbeitsstellung, festgehalten. Ist der Spielbetrieb zu Ende oder soll auf schnellen Vor- bzw. Rücklauf umgeschaltet werden, dann wird die Magnetspule 20 entregt. Die Zugfeder 37 schwenkt die Kopfplatte bei entregt bleibender Magnetspule 20 entgegen dem Uhrzeigersinn wieder in die Ruhe- oder Stand-by-Stellung zurück. Aus dieser Ruhe- oder Stand-by-Stellung kann nun die Stellung für Schnellspulen oder wieder die erste Arbeits-(Spiel-)Stellung angefahren werden. Wie das Anfahren der ersten Arbeitsstellung vor sich geht, wurde bereits beschrieben. Es wird nun das Erreichen und Festhalten der Schnellspulstellung, d. h. der zweiten Arbeitsstellung erläutert.

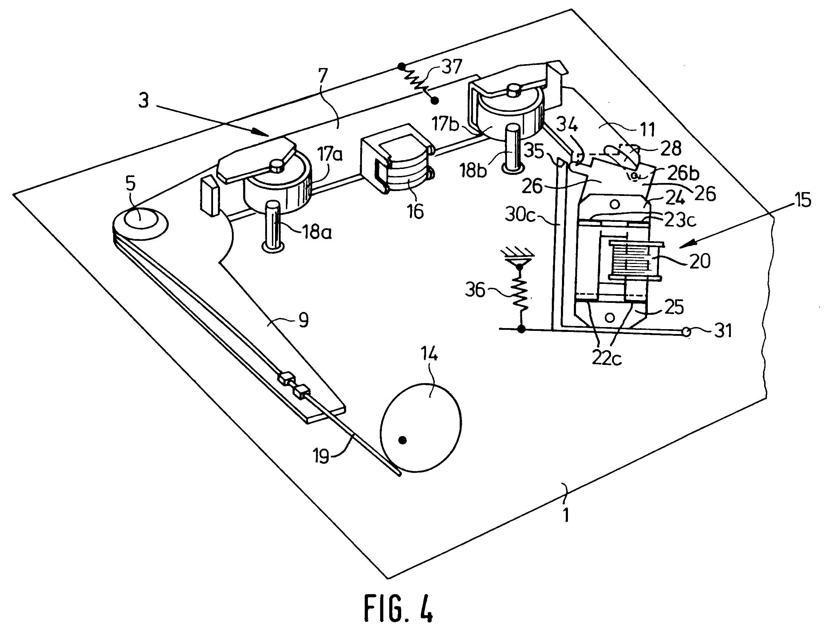

Um in die Schnellspulstellung (Fig. 4) zu kommen, wird zunächst die Magnetspule 20 erregt. Die zweite Ankerplatte 25 liegt bereits an den Polschuhen 22c an. Zu der mechanischen Zug- oder Haltekraft der Zugfeder 36 kommt nun noch eine zusätzliche magnetische Haltefunktion der Polschuhe 22c mit der Ankerplatte 25. Es ist damit schwerer geworden, den längeren Armteil 30c entgegen dem Uhrzeigersinn wegzuschwenken. Das Verstellorgan 14 läuft einmal um und schwenkt die Kopfplatte 3 im Uhrzeigersinn. Die Nase 34 des Schlittens 26 ist nun nicht in der Lage, den längeren Armteil 30c wegzuschwenken. Das bedeutet, daß die Nase 34 vor der Fläche 35 des längeren Armteiles 30c ausweichen muß. Dies führt dazu, daß der Führungsstift 26b zu dem anderen Ende 28b der bogenförmigen Nut 28 geschoben wird. Durch dieses Verschieben rutscht der Schlitten 26 gleichzeitig unter einem Verdrehen in Richtung eines Pfeiles 26c mit dem Leitstift 26a in der Nut 27 in Richtung auf die Elektrohaltemagnetvorrichtung 15. Das bedeutet, daß das Funktionsteil 11 praktisch in Richtung auf die Elektrohaltemagnetvorrichtung 15 verlängert wird. Dieses Verlängern hat zur Folge, daß das Funktionsteil 11 nicht so weit in Richtung auf die Elektrohaltemagnetvorrichtung 15 vorfahren kann, wie zuvor in bezug auf die Spielstellung beschrieben wurde. Dabei macht das Stellglied 14 den gleichen Hub und verformt die Feder 19 im Überhub. Die Kopfplatte 3 bleibt also ein wenig aus der Spielstellung zurück, und das Magnetband legt sich nicht fest an den Magnetkopf 16 an. Damit ist die Stellung für schnellen Vor- und Rücklauf erreicht. Auch liegt keine der Andruckrollen 17a bzw. 17b an einer der Tonwellen 18a, 18b an.

Soll schneller Vor- oder Rücklauf beendet werden, dann wird die Magnetspule 20 entregt. Das führt dazu, daß sich die Ankerplatte 24 von den Polschuhen 23c löst. Die Zugfeder 37 kann die Kopfplatte entgegen dem Uhrzeigersinn wieder in die Ruhe- oder Stand-by-Stellung zurückdrehen. Aufgrund der eben beschriebenen Konstruktion muß immer in die Ruhe- oder Stand-by-Stellung zurückgefahren werden, ehe wieder in die Play- oder Schnellspulstellung vorgefahren werden kann. Der Gesamtvorteil der Vorrichtung besteht darin, daß nur äußerst wenig Funktionsteile notwendig sind und insbesondere nur ein einziger Elektromagnet. Dadurch wird der ganze funktionelle Aufbau wesentlich einfacher, und es kann mit weniger Teilen gearbeitet werden.

Anstelle von einem Elektromagneten sind bei der vorrichtung 15 auch zwei Elektromagneten möglich, einer für die Ankerplatte 24 und einer für die Ankerplatte 25. Auch andere Funktionsteile sind mit der erfindungsgemäßen Vorrichtung in zwei Arbeitsstellungen verstellbar, z. B. ein Zahnrad in einem Antrieb. Die Vorrichtung ist auch bei anderen Elektrogeräten vorteilhaft anwendbar.

## Patentansprüche

1. Vorrichtung zum Verstellen eines Funktionsteiles (11) in einem elektrischen Gerät, insbesondere der Kopfplatte (3) in einem Magnetbandgerät, wobei das Funktionsteil (11) verstellt wird zwischen einer Ruhestellung und zwei im Abstand voneinander liegenden ersten und zweiten Arbeitsstellungen, wobei das in Richtung auf die Ruhestellung federbelastete Funktionsteil (11) in der ersten und der zweiten Arbeitsstellung mittels einer ersten (22) und einer zweiten (23) Elektromagnetvorrichtung gehalten werden, dadurch gekennzeichnet, daß die erste Elektromagnetvorrichtung (22) und die zweite Elektromagnetvorrichtung (23) von einer gemeinsamen Erregerspule (20) erregbar sind und die Jocheisen der Elektromagnetvorrichtungen (22, 23) übereinanderliegend die Erregerspule (20) durchgreifen, daß das Funktionsteil (11) vor der ersten Elektromagnetvorrichtung (22), an die es sich mit einer ersten Ankerplatte (24) anlegen kann, längenveränderlich ausgebildet ist und daß eine von der zweiten Elektromagnetvorrichtung (23) gesteuerte Steuervorrichtung (25, 30) vorgesehen ist, mittels der das Funktionsteil (11) jeweils aus der Ruhestellung beim Anlegen an die erste Elektromagnetvorrichtung (22) mit verkürzter Länge seine erste Arbeitsstellung erreicht und durch seine Verlängerung mittels der Steuervorrichtung (25, 30) beim Anlegen an die zweite Elektromagnetvorrichtung (23) in die zweite Arbeitsstellung gelangt.

2. Vorrichtung nach Anspruch 1, dadurch gekennzeichnet, daß die erste Ankerplatte (24) auf einem Schlitten (26) angeordnet ist, der gegenüber dem Funktionsteil (11) verstellbar ist.

3. Vorrichtung nach Anspruch 1, dadurch gekennzeichnet, daß die Steuervorrichtung aus einem auf den Schlitten steuernd einwirkenden schwenkbaren Arm (30) und einer auf ihm angeordneten zweiten Ankerplatte (25) besteht, die mit der zweiten Elektromagnetvorrichtung (20, 22) zusammenarbeitet.

4. Vorrichtung nach Anspruch 2, dadurch gekennzeichnet, daß der Schlitten (26) eine Nase (34) aufweist, die mit dem Arm (30) insbesondere zur Längenverstellung des Funktionsteiles (11) zusammenwirkt.

5. Vorrichtung nach Anspruch 1, dadurch gekennzeichnet, daß die zwei Lagen des Schlittens (26) der ersten Ankerplatte (24) gegenüber dem Funktionsteil (11) bestimmt werden von dem Arm (30), wobei die eine Lage bei von der zweiten Elektromagnetvorrichtung (20) gehaltener zweiter Ankerplatte (25) und die andere Lage bei freigegebener zweiter Ankerplatte (25) erreicht wird.

6. Vorrichtung nach Anspruch 2, dadurch gekennzeichnet, daß der Schlitten (26) auf dem Funktionsteil (11) in Kulissen (27, 28) geführt ist und durch Zusammenwirken der Nase (34) mit dem Arm (30) gegenüber dem freien Ende des Funktionsteiles (11) mittels der Kulissen (27, 28) von der anderen in die eine Lage überführbar ist.

7. Vorrichtung nach Anspruch 6, dadurch gekennzeichnet, daß zwischen dem Funktionsteil (11) und dem Schlitten (26) Zugfeder (29) vorgesehen ist, die den Schlitten (26) mit der ersten Ankerplatte (24) gegenüber dem Funktionsteil (11) in eine Ruhelage überführt.

8. Vorrichtung nach einem der Ansprüche 1 oder 3, dadurch gekennzeichnet, daß die erste Elektromagnetvorrichtung (22) und die zweite Elektromagnetvorrichtung (23) als Haltemagneten ausgebildet sind, die nur die an sie herangeführten Ankerplatten (24, 25) anheften.

9. Vorrichtung nach Anspruch 1, dadurch gekennzeichnet, daß die Jocheisen (22, 23) U-förmig ausgebildet und mit Polschuhen (22c, 23c) versehen sind und daß die Jocheisen (22, 23) derart entgegengesetzt mit jeweils einem Schenkel (22b, 23b) die Spule (20) so durchgreifen, daß sich im Bereich beider axialer Spulenenden (20a, 20b) jeweils zwei Polschuhe (22c oder 23c) befinden, wobei die einen Polschuhe (23c) mit der ersten (24) und die anderen Polschuhe (22c) mit der zweiten Ankerplatte (25) zusammenwirken.

10. Vorrichtung nach Anspruch 8, dadurch gekennzeichnet, daß der Arm (30) der zweiten Ankerplatte (25) als L-förmiger Schwenkarm ausgebildet ist, daß der Arm (30) sich mit einem Armteil (30c) etwa längs einer Seite des Elektrohaltemagneten (20) erstreckt und auf der anderen Seite der Spule (20) seine Schwenkachse (31) hat, wobei der Arm (30) von einer Feder (36) derart belastet wird, daß sich sein Armteil (30c) bis zum Schlitten 26 erstreckt und am entgegengesetzten Ende seine Schwenkachse (31) aufweist, wobei die Feder (36) gleichzeitig die zweite Ankerplatte (25) in Richtung auf die zugeordneten Polschuhe (22c) belastet.

11. Vorrichtung nach Anspruch 1, dadurch gekennzeichnet, daß das Funktionsteil (11) Teil einer U-förmig ausgebildeten Kopfplatte (3) ist, die an der Basis (7) den Magnetkopf (16) trägt und die am einen Eckbereich (12) um ein Schwenklager (5) verschwenkbar an einem Gestell (1) angeordnet ist, wobei im Eckbereich (12) mit dem Schwenklager (5) ein Schenkel (9) angreift, der mit einem Verstellorgan (14) zusammenwirkt, und wobei der andere Schenkel (11) im Bereich seines freien Endes den Schlitten (26) mit der ersten Ankerplatte (24) trägt.

## Claims

1. A device for moving a functional part (11) in an electrical apparatus, in particular the head-mounting plate (3) in a magnetic-tape apparatus, the functional part (11) being moved between a rest position and two spaced-apart operating positions, *i.e.* a first and a second operating position, and the functional part (11), which is spring-loaded towards its rest position, being held in the first and the second operating position by means of a first (22) and a second (23) electromagnet device, characterised in that the first electromagnet device (22) and the second electromagnet device (23) can be energised by a common energising coil (20) and the superposed yokes of the electromagnet devices (23, 22) extend through the energising coil (20), the functional part (11) is constructed to be extensible with respect to the first electromagnet device (22), to which it can be applied with a first armature plate (24), and there is provided a control device (25, 30) which is controlled by the second electromagnet device (23) and by means of which the non-extended functional part (11) is set each time from the rest position to the first operating position upon application to the first electromagnet device (22), and is set to the second operating position as a result of its extension by means of the control device (25, 30) upon application to the second electromagnet device (23).

2. A device as claimed in Claim 1, characterised in that the first armature plate (24) is arranged on a slide (26) which is movable relative to the functional part (11).

3. A device as claimed in Claim 1, characterised in that the control device comprises a pivotal arm (30) adapted to control the slide, and a second armature plate (25) arranged on said arm and adapted to cooperate with the second electromagnet device (20, 22).

4. A device as claimed in Claim 2, characterised in that the slide (26) comprises a nose (34) adapted to cooperate with the arm (30), in particular to provide the extension of the functional part (11).

5. A device as claimed in Claim 1, characterised in that the two positions of the slide (26) of the first armature plate (24) relative to the functional part (11) are defined by the arm (30), one position being reached when the second armature plate (25) is held by the second electromagnet device (20) and the other position being reached when the second armature plate (25) is released.

6. A device as claimed in Claim 2, characterised in that the slide (26) is guided on the functional part (11) in guideways (27, 28) and by cooperation of the nose (34) with the arm (30) is movable from one position to the other position relative to the free end of the functional part (11) by means of the guideways (27, 28).

7. A device as claimed in Claim 6, characterised in that a tension spring (29) is arranged between the functional part (11) and the slide (26) to move the slide (26) with the first armature plate (24) into a rest position relative to the functional part (11).

8. A device as claimed in Claim 1 or 3, characterised in that the first electromagnet device (22) and the second electromagnet device (23) are constructed as holding magnets, which merely hold the armature plates (24, 25) applied to them.

9. A device as claimed in Claim 1, characterised in that the yokes (22, 23) are U-shaped and are provided with polepieces (22c, 23c), and the yokes (22, 23) extend oppositely through the coil (20) with one limb (22b, 23b) each, in such a way that two polepieces (22c or 23c) are situated at the location of each of the two axial coil ends (20a, 20b), one set of polepieces (23c) being adapted to cooperate with the first armature plate (24) and the other set of polepieces (22c) being adapted to cooperate with the second armature plate (25).

10. A device as claimed in Claim 8, characterised in that the arm (30) of the second armature plate (25) is constructed as an L-shaped pivotal arm, the arm (30) has one arm portion (30c) extending substantially adjacent one side of the holding electromagnet (20) and has a pivot (31) situated at the other side of the coil (20), the arm (30) being loaded by a spring (36) in such a way that its arm portion (30c) extends up to the slide (26) and has a pivot (31) at the opposite end, the spring (36) at the same time urging the second armature plate (25) towards the associated polepieces (22c).

11. A device as claimed in Claim 1, characterised in that the functional part (11) forms part of a U-shaped head-mounting plate (3), whose base (7) carries the magnetic head (16) and which is mounted on a chassis (1) so as to be pivotable about a pivot (5) at a corner portion (12), one limb (9), which cooperates with an actuating member (14), acting upon the corner portion (12) with the pivot (5), and the other limb (11) carrying the slide (26) with the first armature plate (24) at the location of its free end.

## Revendications

1. Dispositif de déplacement d'un élément fonctionnel (11) dans un appareil électrique, en particulier de la plaque porte-tête (3) dans un appareil à bande magnétique, l'élément fonctionnel (11) étant déplacé entre une position de repos et deux positions espacées l'une de l'autre pour constituer une première et une seconde position de travail, l'élément fonctionnel (11) rappelé par ressort en direction de la position de repos étant retenu dans la première et la seconde position de travail au moyen d'un premier (22) et d'un second (23) dispositif à électroaimant, caractérisé en ce que le premier dispositif à électroaimant (22) et le second dispositif à électroaimant (23) peuvent être excités par une bobine d'excitation commune (20) et les culasses des dispositifs à électroaimant (22, 23), superposées l'une à l'autre, traversent la bobine d'excitation (20), que l'élément fonctionnel (11), devant le premier dispositif à électroaimant (22) contre lequel il peut s'appliquer par une première plaque d'armature (24), est conçu variable en longueur et qu'un dispositif de commande (25, 30) commandé par le second dispositif à électroaimant (23) est prévu, au moyen duquel l'élément fonctionnel (11), chaque fois à partir de la position de repos, atteint sa première position de travail, alors que sa longueur est raccourcie, lorsqu'il est appliqué contre le premier dispositif à électroaimant (22) et parvient dans sa seconde position de travail, de par son allongement au moyen du dispositif de commande, lorsqu'il est appliqué contre le second dispositif à électroaimant (23).

2. Dispositif suivant la revendication 1, caractérisé en ce que la première plaque d'armature (24) est montée sur un coulisseau (26) qui peut être déplacé par rapport à l'élément fonctionnel (11).

3. Dispositif suivant la revendication 1, caractérisé en ce que le dispositif de commande est constitué d'un bras pivotant (30) agissant à des fins de commande sur le coulisseau et d'une seconde plaque d'armature (25) montée sur ce bras, qui coopère avec le second dispositif à électroaimant (20, 22).

4. Dispositif suivant la revendication 2, caractérisé en ce que le coulisseau (26) présente un talon (34) qui coopère avec le bras (30), en particulier pour le réglage en longueur de l'élément fonctionnel (11).

5. Dispositif suivant la revendication 1, caractérisé en ce que les deux positions du coulisseau (26) de la première plaque d'armature (24) par rapport à l'élément fonctionnel (11) sont déterminées par le bras (30), la première position étant atteinte lorsque la seconde plaque d'armature (25) est retenue par le second dispositif à électroaimant (20) et l'autre position étant atteinte lorsque la seconde plaque d'armature (25) est libérée.

6. Dispositif suivant la revendication 2, caractérisé en ce que le coulisseau (26) est guidé sur l'élément fonctionnel (11) dans des rainures (27, 28) et peut être transféré de l'autre position dans la première position au moyen des rainures (27, 28), par rapport à l'extrémité libre de l'élément fonctionnel (11), par la coopération du talon (34) avec le bras (30).

7. Dispositif suivant la revendication 6, caractérisé en ce qu'entre l'élément fonctionnel (11) et le coulisseau (26) est prévu un ressort de traction (29) qui transfère le coulisseau (26) avec la première plaque d'armature (24) dans une position de repos par rapport à l'élément fonctionnel (11).

8. Dispositif suivant la revendication 1 ou 3, caractérisé en ce que le premier dispositif à électroaimant (22) et le second dispositif à électroaimant (23) ont la forme d'aimants de retenue qui ne retiennent que les plaques d'armature (24, 25) qui leurs sont présentées.

9. Dispositif suivant la revendication 1, caractérisé en ce que les culasses (22, 23) sont coudées en U et sont pourvues de pièces polaires (22c, 23c) et que les culasses (22, 23) disposées tête-bêche, traversent chacune la bobine (20) par une branche (22b, 23b), de telle façon que, dans le domaine des deux extrémités axiales (20a, 20b) de la bobine se trouvent chaque fois deux pièces polaires (22c ou 23c), les premières pièces polaires (23c) coopérant avec la première plaque d'armature (24) et les autres pièces polaires (22c) coopérant avec la seconde plaque d'armature (25).

10. Dispositif suivant la revendication 8, caractérisé en ce que le bras (30) de la seconde plaque d'armature (25) a la forme d'un bras pivotant coudé en L, que le bras (30) s'étend par une partie de bras (30c) en substance le long d'un côté de l'électroaimant de retenue (20) et son axe de pivotement (31) se trouve de l'autre côté de la bobine (20), le bras (30) étant sollicité par un ressort (36), d'une manière telle que sa partie (30c) s'étende jusqu'au coulisseau (26) et présentant son axe de pivotement (31) à son extrémité opposée, le ressort (36) sollicitant simultanément la seconde plaque d'armature (25) en direction des pièces polaires (22c) qui y sont associées.

11. Dispositif suivant la revendication 1, caractérisé en ce que l'élément fonctionnel (11) fait partie d'une plaque porte-tête coudée en U (3) qui porte, sur la base (7), la tête magnétique (16) et qui, dans une zone de coin (12), est montée à pivotement sur un châssis (1) autour d'un palier de pivotement (5), étant entendu que dans la zone de coin (12) comportant le palier de pivotement (5) débute une branche (9) qui coopère avec un organe de déplacement (14), l'autre branche (11) portant, dans la zone de son extrémité libre, le coulisseau (26) avec la première plaque d'armature (24).
